# EUROPEAN PATENT APPLICATION

(11) **EP 4 654 399 A1**
(43) Date of publication of application: **26.11.2025**
(21) Application number: 24744342.7
(22) Date of filing: 18.01.2024
(51) Int. Cl.: H01R 13/52

(54) **INTEGRATED COMPONENT**

(30) Priority: 18.01.2023 CN 202310200197
(71) Applicant: ZHEJIANG SANHUA AUTOMOTIVE COMPONENTS CO., LTD., Hangzhou, Zhejiang 310018 (CN)
(72) Inventor: BAO, Junfeng, Hangzhou, Zhejiang 310018 (CN); XIAO, Bin, Hangzhou, Zhejiang 310018 (CN); YU, Bingqing, Hangzhou, Zhejiang 310018 (CN); WANG, Pingying, Hangzhou, Zhejiang 310018 (CN)
(74) Representative: Maikowski & Ninnemann Patentanwälte Partnerschaft mbB
(86) International application number: PCT/CN2024/072957
(87) International publication number: WO 2024/153169

(57) **Abstract**

An integrated component. The integrated component comprises a main casing, a fluid control component and a control device; the main casing comprises an electric signal transfer part, the electric signal transfer part comprising a first casing part and a transfer pin, and at least part of the transfer pin being located inside the first casing part; the fluid control component and the main casing are sealed; the fluid control component comprises an electric signal transmission part and a stator module, the electric signal transmission part comprising a second casing part and an electric transmission pin, at least part of the electric transmission pin being located inside the second casing part, and the electric transmission pin being electrically connected to a coil of the stator module; the control device is provided with a control chamber, the control device comprising a circuit board, and the circuit board being located in the control chamber; the first casing part and the second casing part are nested with respect to each other and are sealed; a first end part of the transfer pin is electrically connected to the electric transmission pin, and a second end part of the transfer pin is electrically connected to the circuit board. Such arrangement can improve the wiring integration density of the integrated component.

## Description

The present application claims the priority to Chinese Patent Application No. 202310200197.2, titled "INTEGRATED COMPONENT", filed on January 18, 2023 with the China National Intellectual Property Administration, which is incorporated herein by reference in its entirety.

### FIELD

The present application relates to the technical field of fluid control, and in particular to an integrated assembly.

### BACKGROUND

An existing fluid control system generally includes at least two fluid elements, each requiring a corresponding driving assembly to function. The configuration with numerous driving assemblies may result in complicated wiring structures, which hinder the simplification of the fluid control system.

### SUMMARY

An object of the present application is to provide an integrated assembly, which facilitates the simplification of wiring structures of the integrated assembly and enhances the integration level of the wiring.

An integrated assembly is provided according to an embodiment of the present application. The integrated assembly includes a main housing, a fluid control assembly, and a control device. The main housing includes an electrical signal connection portion, which includes a first housing portion and a connection pin. At least a part of the connection pin is located in the first housing portion.

The fluid control assembly is sealingly connected to the main housing. The fluid control assembly includes an electrical signal transmission portion and a stator assembly. The electrical signal transmission portion includes a second housing portion and an electrical transmission pin. At least a part of the electrical transmission pin is located in the second housing portion, and the electrical transmission pin is electrically connected to a coil of the stator assembly.

The control device includes a control chamber and a circuit board located in the control chamber.

One of the first housing portion and the second housing portion is sealingly inserted in the other. A first end portion of the connection pin is electrically connected to the electrical transmission pin, and a second end portion of the connection pin is electrically connected to the circuit board.

According to the integrated assembly provided in the embodiment of the present application, the electrical signal connection portion of the main housing includes a first housing portion and a connection pin, and the electrical signal transmission portion of the fluid control assembly includes a second housing portion and an electrical transmission pin. At least a part of the electrical transmission pin is located in the second housing portion, and at least a part of the connection pin is located in the first housing portion, so that both of the electrical transmission pin and the connection pin are protected by the respective housing portions. Further, a first end portion of the connection pin is electrically connected to the electrical transmission pin, and a second end portion of the connection pin is electrically connected to a circuit board, enabling electrical signals to be transmitted between the circuit board, the connection pin, the electrical transmission pin, and the coil of the stator assembly, thereby facilitating the control of the fluid control assembly by the circuit board. In the embodiment of the present application, a part of the first housing portion and a part of the second housing portion are arranged one inside the other in a sealing manner, which facilitates the sealing between the electrical signal transmission portion and the electrical signal connection portion and ensures stable transmission of electrical signals. Compared with complex external wiring harness structures used for electrically connecting the stator assembly of the fluid control assembly to the circuit board, the embodiment of the present application is advantageous for simplifying the wiring structure of the integrated assembly and improving the degree of integration of the wiring.

### BRIEF DESCRIPTION OF THE DRAWINGS

FIG. 1 is a schematic exploded structural view of an integrated assembly according to an embodiment of the present application;
FIG. 2 is a schematic perspective structural view of the integrated assembly shown in FIG. 1;
FIG. 3 is a schematic partial cross-sectional structural view of the integrated assembly shown in FIG. 2;
FIG. 4 is a schematic partial perspective structural view of the integrated assembly shown in FIG. 2 from one perspective;
FIG. 5 is a schematic partial exploded structural view of the integrated assembly shown in FIG. 4;
FIG. 6 is a schematic partial perspective structural view of the integrated assembly shown in FIG. 2 from another perspective;
FIG. 7 is a schematic perspective structural view of a housing assembly according to an embodiment of the present application from one perspective;
FIG. 8 is a schematic partial perspective structural view of the housing assembly according to the embodiment of the present application from another perspective;
FIG. 9 is a schematic cross-sectional structural view of the housing assembly shown in FIG. 8;
FIG. 10 is a schematic perspective structural view of a control valve according to an embodiment of the present application;
FIG. 11 is a schematic partial perspective structural view of the integrated assembly shown in FIG. 2 from yet another perspective;
FIG. 12 is a schematic partial cross-sectional structural view of the integrated assembly shown in FIG. 2;
FIG. 13 is a schematic cross-sectional structural view of a part of a pump assembly according to an embodiment of the present application; and
FIG. 14 is a schematic cross-sectional structural view of another part of a pump assembly according to the embodiment of the present application.

**Reference numerals:**

| | | | |
|---|---|---|---|
| 1 | integrated assembly, | X | height direction, |
| 100 | main housing, | 101 | fluid channel, |
| 102 | mounting chamber, | 10 | fluid channel portion, |
| 11 | electrical signal connection portion, | 111 | first housing portion, |
| 112 | connection pin, | E1 | first end portion, |
| E2 | second end portion, | E3 | engagement segment, |
| 113 | first connection portion, | 114 | second connection portion, |
| 1141 | third sub-portion, | 1142 | fourth sub-portion, |
| 12 | housing assembly, | 13 | cover assembly, |
| 131 | bottom wall portion, | 132 | heat dissipation plate, |
| 200 | fluid control assembly, | 201 | communication port, |
| 20 | electrical signal transmission portion, | 21 | second housing portion, |
| 22 | electrical transmission pin, | E4 | connection segment, |
| 30 | stator assembly, | 23 | first transmission portion, |
| 230 | first pin, | 231 | first sub-portion, |
| 232 | second sub-portion, | 233 | input portion, |
| 234 | connection board, | 24 | second transmission portion, |
| 241 | second pin, | 50 | pump assembly, |
| 51 | pump cover portion, | 52 | first driving housing, |
| 521 | first casing portion, | 522 | second casing portion, |
| 300 | control device, | 301 | control chamber, |
| 41 | circuit board, | 42 | third driving housing, |
| 501 | first seal, | 502 | second seal, |
| 60 | control valve, | 61 | second driving housing, |
| 62 | motor. | | |

### DETAILED DESCRIPTION OF THE EMBODIMENTS

The features and exemplary embodiments of various aspects of the present application are described in detail below. To make the objects, technical solutions and advantages of the present application more clear and apparent, the present application is described in detail in conjunction with the drawings and the specific embodiments. Herein, relational terms such as "first" and "second" are only used to distinguish one element from another having the same name, and do not necessarily require or imply the existence of any such relationship or order between those elements.

An integrated assembly according to an embodiment of the present application is applicable to a thermal management system, which may be a vehicle thermal management system, such as a thermal management system for a new energy vehicle.

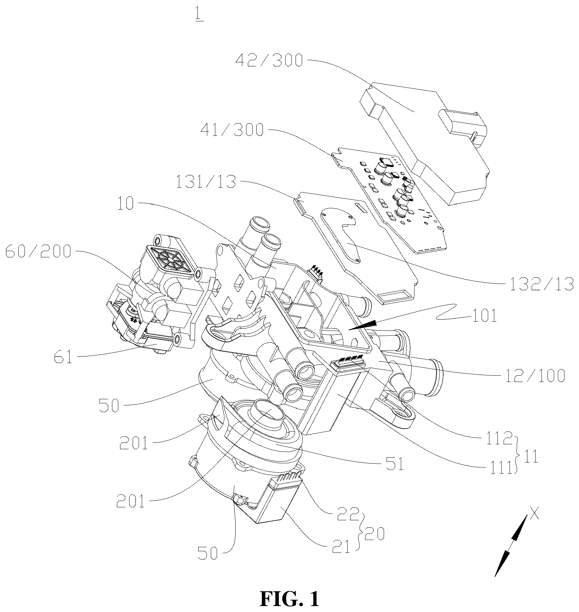

As shown in FIGS. 1 to 5, an integrated assembly 1 is provided according to an embodiment of the present application. The integrated assembly 1 includes a main housing 100, a fluid control assembly 200, and a control device 300. The fluid control assembly 200 in the embodiment of the present application may include one of a pump assembly 50, a control valve 60, a gas-liquid separator and the like, or a combination thereof. Fluid can flow through the fluid control assembly 200. The main housing 100 is sealingly connected to the fluid control assembly 200 and has a fluid channel 101. The control device 300 includes a circuit board 41 that can control the operation of the fluid control assembly 200, allowing the fluid to flow between the fluid control assembly 200 and the fluid channel 101.

In a case that there are multiple fluid control assemblies 200, if each of the fluid control assemblies 200 is electrically connected to the circuit board 41 of the control device 300 through a complex wiring harness structure, the cost will be high, and it will take up a considerable amount of space.

To address the above issues, in the embodiment of the present application, the main housing 100 includes an electrical signal connection portion 11. The electrical signal connection portion 11 includes a first housing portion 111 and a connection pin 112. At least a part of the connection pin 112 is located in the first housing portion 111. The connection pin 112 and the first housing portion 111 is integrally formed by injection molding, or at least a part of the connection pin 112 is fixedly disposed in the first housing portion 111. Specifically, the first housing portion 111 is injection-molded with the connection pin 112 as an insert, or the first housing portion 111 is fixedly connected to the connection pin 112. A second housing portion 21 is injection-molded with an electrical transmission pin 22 as an insert, or the second housing portion 21 is fixedly connected to the electrical transmission pin 22. In an embodiment, the connection pin 112 is fixedly connected to the first housing portion 111. For example, the connection pin 112 has a flat cable structure and is fixedly mounted in the first housing portion 111. The first housing portion 111 is made of an insulating material. As such, the first housing portion 111 can provide good protection and insulation for the connection pin 112.

The fluid control assembly 200 is sealingly connected to the main housing 100, thereby facilitating stable fluid flow between the main housing 100 and the fluid control assembly 200 and reducing fluid leakage. The fluid control assembly 200 includes an electrical signal transmission portion 20 and a stator assembly 30. The electrical signal transmission portion 20 includes a second housing portion 21 and an electrical transmission pin 22. At least a part of the electrical transmission pin 22 is located in the second housing portion 21, and the electrical transmission pin 22 is electrically connected to a coil of the stator assembly 30. The electrical transmission pin 22 and the second housing portion 21 are integrally formed by injection molding, or at least a part of the electrical transmission pin 22 is fixedly disposed in the second housing portion 21. For example, the electrical transmission pin 22 has a flat cable structure and is fixedly mounted in the second housing portion 21. The second housing portion 21 is made of an insulating material. In this way, the second housing portion 21 can provide good protection and insulation for the electrical transmission pin 22. It should be noted that the electrical connection between two components herein refers to the capability of transmitting electrical signals between the two components. These two components may be in direct contact with each other for electrical connection, or may be welded to each other for electrical connection, or may be electrically connected through other structures.

The control device 300 includes a control chamber 301 and a circuit board 41 located in the control chamber 301. One of the first housing portion 111 and the second housing portion 21 is sealingly inserted in the other one. A first end portion E1 of the connection pin 112 is electrically connected to the electrical transmission pin 22, and a second end portion E2 of the connection pin 112 electrically connected to the circuit board 41. With the above configurations of the integrated assembly 1 according to the embodiment of the present application, the electrical signals can be transmitted between the circuit board 41, the connection pin 112, the electrical transmission pin 22, and the stator assembly 30, which facilitates the control of the fluid control assembly 200 by the circuit board 41. Further, one of the first housing portion 111 and the second housing portion 21 is sealingly inserted in the other, which facilitates the sealing between the electrical signal transmission portion 20 and the electrical signal connection portion 11, ensuring stable transmission of the electrical signals. Compared with complex external wiring harness structures used to electrically connect the stator assembly of the fluid control assembly to the circuit board, the solutions according to the present application helps to simplify the wiring structure of the integrated assembly 1 and enhance degree of integration of the wiring.

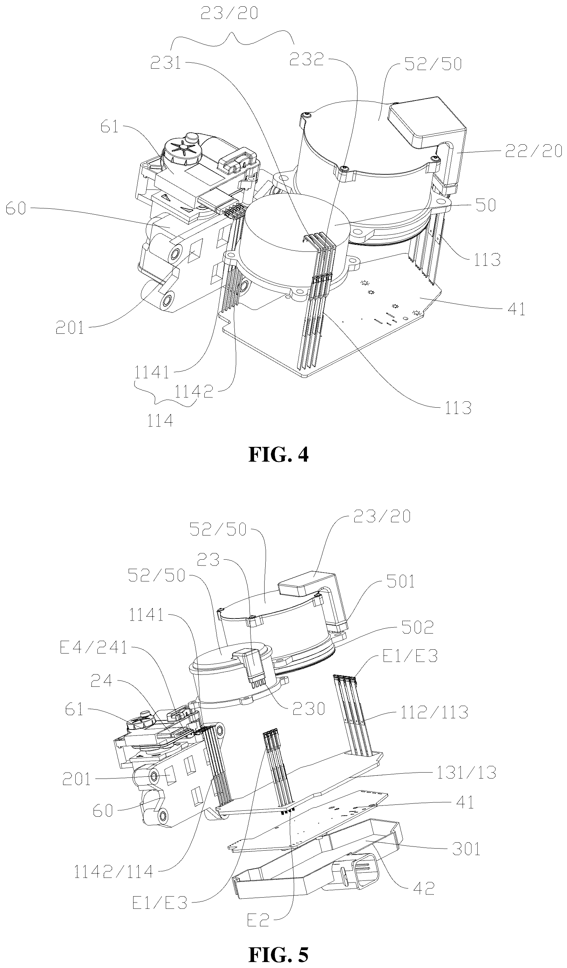

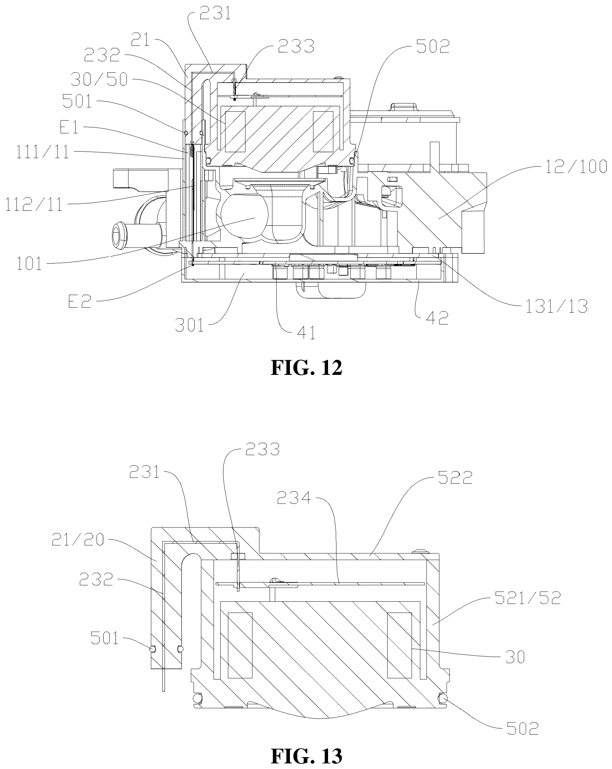

A part of the first housing portion 111 and a part of the second housing portion 21 are arranged one inside the other in a sealing manner. As shown in FIGS. 5 and 12, to facilitate the sealing between the first housing portion 111 and the second housing portion 21, at least one of the first housing portion 111 and the second housing portion 21 is provided with a groove structure. The integrated assembly 1 further includes a first seal 501, which is mounted in this groove structure and arranged between the first housing portion 111 and the second housing portion 21.

In the embodiment of the present application, the circuit board 41 may integrate control circuits for the fluid control assembly 200. For example, when the fluid control assembly 200 includes a pump assembly 50, the circuit board 41 may integrate the control circuits for the pump assembly 50. If the integrated assembly 1 further includes a control valve 60 and other fluid control assemblies, the circuit board 41 may further integrate the control circuits for at least one of, or a combination of, the control valve 60 and other fluid control assemblies, thereby reducing the number of the circuit boards 41 required in the integrated assembly 1. When the integrated assembly 1 according to the embodiment of the present application is applied to new energy vehicles, the circuit board 41 may further integrate control circuits for other electrical assemblies. For example, the circuit board 41 may further integrate control circuits for generators.

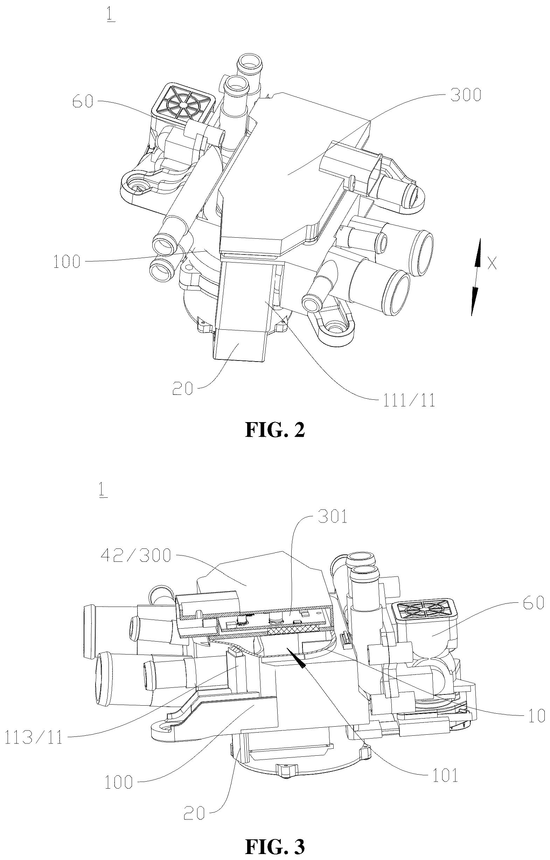

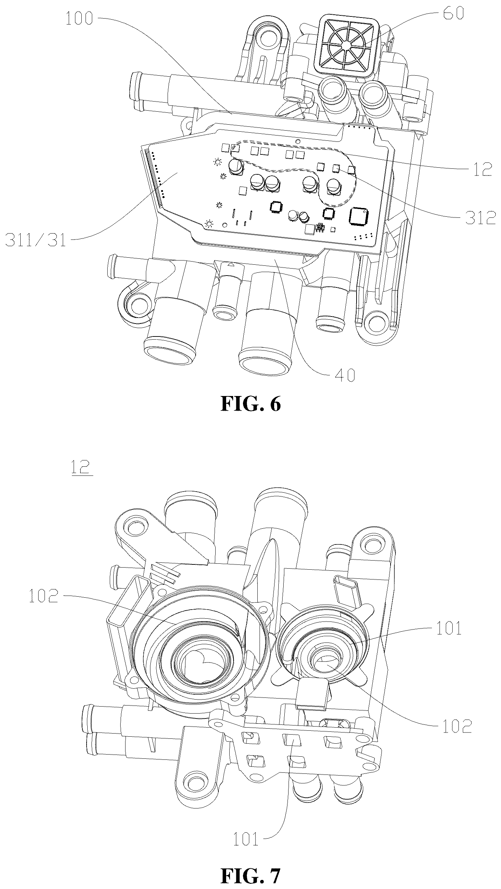

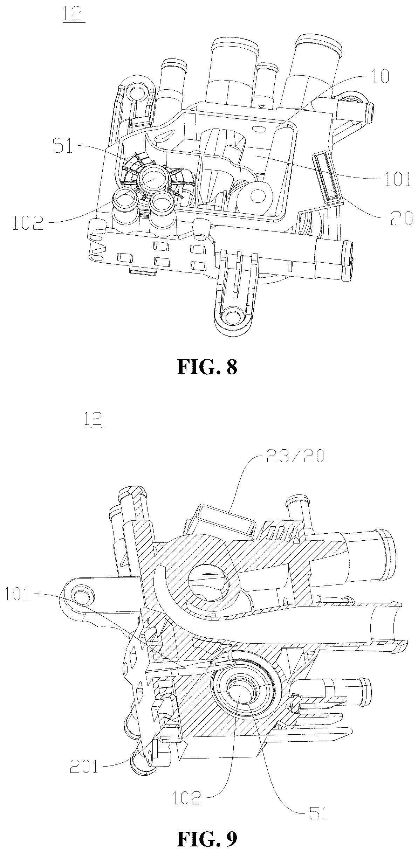

With reference to FIGS. 3, and 7 to 9, to enable fluid flow in the main housing 100, in some embodiments, the main housing 100 further includes a flow channel portion 10. The main housing 100 has the fluid channel 101, and the flow channel portion 10 forms at least a part of a wall of the fluid channel 101. The flow channel portion 10 and the first housing portion 111 of the electrical signal connection portion 11 are in a one-piece structure. With this arrangement, the flow channel portion 10 and the electrical signal connection portion 11 can be injection-molded into an integrated structure, thereby simplifying the structure of the integrated assembly 1. Further, the integrated assembly 1 has a communication port 201, which is at least one of an inlet and an outlet of the fluid control assembly 200, and the communication port 201 is in communication with the fluid channel 101. This configuration allows the fluid to flow between the fluid control assembly 200 and the main housing 100 through the communication port 201 and the fluid channel 101.

In a specific implementation, the communication port 201 may be provided on the fluid control assembly 200 or the main housing 100. For example, the fluid control assembly 200 includes a pump assembly 50. The main housing 100 has a mounting chamber 102, and at least a part of the pump assembly 50 is located in the mounting chamber 102. The integrated assembly 1 includes a pump cover portion 51. The pump assembly 50 includes an impeller assembly (not shown in the drawings). The pump cover portion 51 is assembled into the mounting chamber 102 and is sealingly connected to the main housing 100, or the pump cover portion 51 and the main housing 100 are injection-molded into a one-piece structure. The communication port 201 is located on the pump cover portion 51, and at least a part of the impeller assembly is located in the pump cover portion 51. In this embodiment, as shown in FIGS. 1, 8, and 9, the pump cover portion 51 is separately arranged and mounted to the main housing 100. In this case, the communication ports 201 include an inlet and an outlet, both of which are located on the pump cover portion 51. The main housing 100 includes a fluid channel 101 in communication with the inlet and the outlet.

In some embodiments, the electrical signal connection portion 11 is located outside the fluid channel 101. In this case, the flow channel portion 10 is arranged between the electrical signal connection portion 11 and the fluid channel 101. This arrangement prevents the fluid in the fluid channel 101 from leaking into the electrical signal connection portion 11. With further reference to FIG. 12, to improve the sealing performance of the integrated assembly 1, the integrated assembly 1 further includes a second seal 502, which is located between the fluid control assembly 200 and the main housing 100 and is spaced apart from the first seal 501. With this arrangement, it is possible to separately seal the fluid passage structure of the integrated assembly 1 and the electrical signal connection portion 11 with wiring. Compared with integrating the first seal 501 and the second seal 502 into a single seal, which can be large, the integrated assembly 1 according to the embodiment of the present application has better sealing performance.

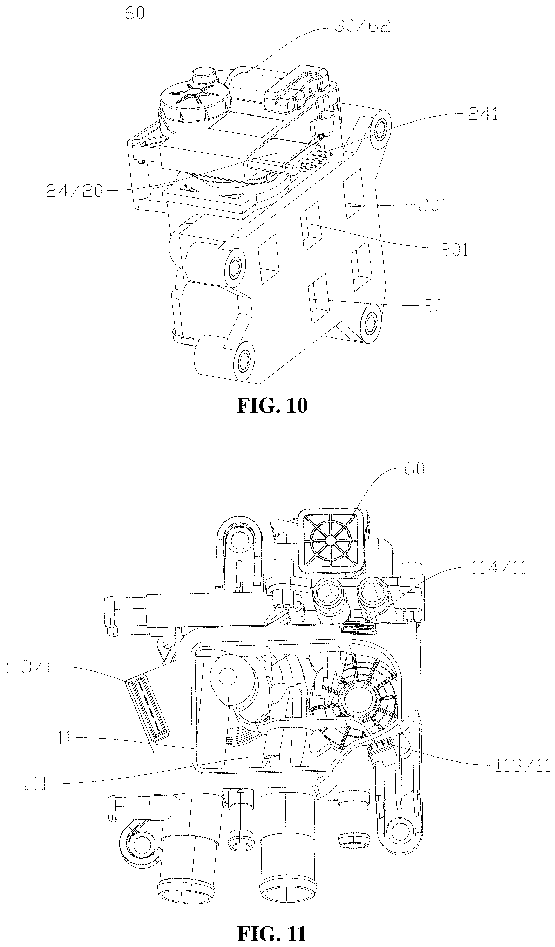

With further reference to FIGS. 1 to 12, in some embodiments, at least a part of the control device 300 is spaced apart from the main housing 100 in a height direction X of the integrated assembly 1. The second end portion E2 of the connection pin 112 passes through the main housing 100 to be located in the control chamber 301. The second end portion E2 of the connection pin 112 is electrically connected to the circuit board 41 through physical contact, and the first end portion E1 of the connection pin 112 is electrically connected to the electrical transmission pin 22 through physical contact. In an embodiment, one of the connection pin 112 and the electrical transmission pin 22 includes a connection segment E3, and the other includes an engagement segment E4. The connection segment E3 is inserted into the engagement segment E4 to be engaged with the engagement segment E4. This arrangement not only achieves the electrical connection between the connection pin 112 and the electrical transmission pin 22, but also facilitates the assembly of the electrical signal connection portion 11 and the electrical signal transmission portion 20. Alternatively, in some embodiments, the connection pin 112 and the electrical transmission pin 22 are electrically connected by welding. Alternatively, the connection pin 112 and the electrical transmission pin 22 are electrically connected by a spring clip. The circuit board 41 may be provided with a solder pad structure or a press-fit structure to electrically connect the connection pin 112 to the circuit board 41.

In some embodiments, in the height direction X of the integrated assembly 1, a projection of an end portion of the connection pin 112 facing the circuit board 41 is within a projection of the circuit board 41, and the electrical transmission pins 22 of at least two of the fluid control assemblies 200 are located on the same side of the circuit board 41 in a thickness direction of the circuit board 41. Specifically, the integrated assembly 1 according to an embodiment of the present application includes three fluid control assemblies 200. The electrical transmission pins 22 of these three fluid control assemblies 200 are all located on the same side of the circuit board 41 in the thickness direction of the circuit board 41, and projections of the connection pins 112 corresponding to the three fluid control assemblies 200 are within the projection of the circuit board 41. This arrangement facilitates the electrical connections between the connection pins 112 corresponding to the multiple fluid control assemblies 200 and the circuit board 41. It is understandable that, with connection pins 112 having different structures, such as a connection pin 112 of a U-shaped structure, the electrical transmission pins 22 of the fluid control assemblies 200 may be located on different sides of the circuit board 41 in the thickness direction of the circuit board 41.

In some embodiments, the fluid control assembly 200 includes at least one pump assembly 50, the main housing 100 has a mounting chamber 102, and at least a part of the pump assembly 50 is located in the mounting chamber 102. The pump assembly 50 includes a first driving housing 52, and the pump cover portion 51 is sealingly connected to the first driving housing 52. Specifically, the pump cover portion 51 and the first driving housing 52 are connected and are sealed through a second seal 502, and the stator assembly 30 of the pump assembly 50 is located in the first driving housing 52. The electrical signal transmission portion 20 includes a first transmission portion 23, and the second housing portion 21 of the first transmission portion 23 and the first driving housing 52 are integrally formed.

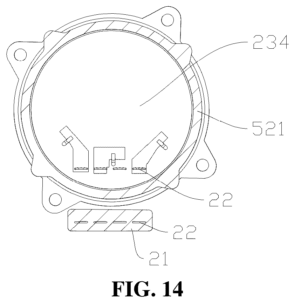

In a specific implementation, as shown in FIGS. 13 and 14, the first driving housing 52 includes a first casing portion 521 and a second casing portion 522 that are connected to each other. The first casing portion 521 and the second casing portion 522 may be sealingly connected. A part of the second casing portion 522 and the first casing portion 521 are arranged along an axial direction of the pump assembly 50. The stator assembly 30 of the pump assembly 50 is located in the first casing portion 521. A first pin 230 of the first transmission portion 23 and the second casing portion 522 are integrally formed by injection molding. The pump assembly 50 may further include a connection board 234. An input portion 233 is connected to the connection board 234. An output winding structure of the stator assembly 30 is connected to the connection board 234, so that the input portion 233 can be electrically connected to the winding output structure of the stator assembly 30 through a wiring structure. This arrangement allows a part of the first transmission portion 23 to be located away from the main housing 100, thereby facilitating mounting.

In some embodiments, in the height direction X of the integrated assembly 1, at least a part of the main housing 100 is located between the control device 300 and the first driving housing 52. The electrical signal connection portion 11 includes a first connection portion 113. The electrical transmission pin 22 of the first transmission portion 23 includes a first sub-portion 231 and a second sub-portion 232 that are electrically connected to each other. An extension direction of the first sub-portion 231 intersects with an extension direction of the second sub-portion 232. The first sub-portion 231 is electrically connected to the stator assembly 30 of the pump assembly 50, and the second sub-portion 232 is electrically connected to the connection pin 112 of the first connection portion 113. Both of the second sub-portion 232 and the first connection portion 113 extend along the height direction X of the integrated assembly 1. This arrangement simplifies the wiring structure of the first connection portion 113.

In some embodiments, the fluid control assemblies 200 further includes at least one control valve 60, which is located on an outer side of a peripheral wall of the main housing 100. The control valve 60 has at least two communication ports 201, which are located on an outer surface of the control valve 60 and are respectively communicated with corresponding fluid channels 101. The control valve 60 includes a second driving housing 61 and a motor 62, and the motor 62 is located in a chamber defined by the second driving housing 61. The motor 62 includes a stator assembly 30. The electrical signal transmission portion 20 includes a second transmission portion 24, and a second housing portion 21 of the second transmission portion 24 and the second driving housing 61 are integrally formed.

In some embodiments, an extension direction of the second transmission portion 24 intersects with the height direction X of the integrated assembly 1. The electrical signal connection portion 11 further includes a second connection portion 114, which includes a third sub-portion 1141 and a fourth sub-portion 1142. An extension direction of the third sub-portion 1141 intersects with an extension direction of the fourth sub-portion 1142. The electrical transmission pin 22 of the second transmission portion 24 is electrically connected to the connection pin 112 of the third sub-portion 1141 through physical contact, and the connection pin 112 of the fourth sub-portion 1142 is electrically connected to the circuit board 41 through physical contact. Defining the electrical transmission pin 22 of the second transmission portion 24 as a second pin 241, the second pin 241 extends in a direction perpendicular to the height direction of the integrated assembly 1.

The main housing 100 includes a housing assembly 12 and a cover assembly 13. One side of the cover assembly 13 in the thickness direction of the cover assembly 13 is fixedly and sealingly connected to the housing assembly 12 by welding. The control device 300 further includes a third driving housing 42, which is located on the other side of the cover assembly 13 away from the main housing 100. The other side of the cover assembly 13 in the thickness direction thereof is fixedly and sealingly connected to the third driving housing 42 by welding, and the third driving housing 42 forms a part of a wall of the control chamber 301.

The cover assembly 13 includes a bottom wall portion 131 and a heat dissipation plate 132. The bottom wall portion 131 and the main housing 100 may be injection-molded into an integrated structure or sealingly connected to each other by welding. In an embodiment of the present application, the bottom wall portion 131 is fixed to the main housing 100 by welding. Specifically, a part of the bottom wall portion 131 is fixed to a part of the flow channel portion 10 facing the bottom wall portion 131 by welding to form a first weld seam, and another part of the bottom wall portion 131 is fixed to the first housing portion 111 of the electrical signal connection portion 11 by welding to form a second weld seam. The second weld seam is spaced apart from the first weld seam and is located on an outer peripheral side of the first weld seam, preventing the fluid from leaking through the weld seams and reaching the connection pin 112 of the electrical signal connection portion 11. In a specific implementation, the main housing 100 is provided with protruding structures that are welded to the bottom wall portion 131.

In an embodiment of the present application, the control valve 60 is mounted on a side wall portion of the main housing 100, and a rotation axis of a valve core of the control valve 60 is parallel to or coincides with the height direction X of the integrated assembly 1. The two pump assemblies 50 are disposed on the same side of the main housing 100 in a height direction of the main housing 100, and the control device 300 is located on the other side of the main housing 100 in the height direction of the main housing 100. The main housing 100 further includes connecting pipe structures corresponding to the fluid control assemblies 200, and the electrical signal connection portion 11 is arranged to avoid the connecting pipe structure.

A thermal management system is further provided according to an embodiment of the present application, including the integrated assembly described above, which is advantageous for simplifying the wiring structure of the thermal management system.

It should be noted that the integrated assembly 1 in the embodiments of the present application may include one or two pump assemblies 50, or may include three or more pump assemblies 50. Similarly, the integrated assembly 1 may include one or more control valves 60. The integrated assembly 1 may also include throttling elements or other fluid components.

In summary, according to the integrated assembly 1 provided in the embodiments of the present application, the electrical signal connection portion 11 of the main housing 100 includes the first housing portion 111 and the connection pin 112, and the electrical signal transmission portion 20 of the fluid control assembly 200 includes the second housing portion 21 and the electrical transmission pin 22. At least a part of the electrical transmission pin 22 is arranged in the second housing portion 21, and at least a part of the connection pin 112 is arranged in the first housing portion 111, so that the electrical transmission pin 22 and the connection pin 112 can be protected by the respective housing portions. Further, the first end portion E1 of the connection pin 112 is electrically connected to the electrical transmission pin 22, and the second end portion E2 of the connection pin 112 is electrically connected to the circuit board 41, allowing the electrical signals to be transmitted between the circuit board 41, the connection pin 112, the electrical transmission pin 22, and the stator assembly 30, thereby facilitating the control of the fluid control assembly 200 by the circuit board 41. In the embodiments of the present application, one of the first housing portion 111 and the second housing portion 21 is sealingly inserted in the other, which facilitates the sealing between the electrical signal transmission portion 20 and the electrical signal connection portion 11, ensuring stable transmission of the electrical signals. Compared with complex external wiring harness structures used for the electrical connections between the stator assembly of the fluid control assembly and the circuit board, the embodiments of the present application is advantageous for simplifying the wiring structure of the integrated assembly 1 and improving the degree of integration of the wiring.

It should be noted that the above embodiments are only for illustrating rather than limiting the technical solutions described according to the present application, such as the directional definition indicated by terms "front", "rear", "left", "right", "up", "down" and the like. In this specification, the present application is described in detail with reference to the above embodiments. It is understandable for those skilled in the art that they can still make modifications, combinations or equivalently replacements to the present application, and all technical solutions and improvements thereof that do not depart from the spirit and scope of the present application shall fall within the scope of the claims of the present application.

## Claims

1. An integrated assembly (1), comprising:
a main housing (100);
a fluid control assembly (200); and
a control device (300), wherein
the main housing (100) comprises an electrical signal connection portion (11), the electrical signal connection portion (11) comprises a first housing portion (111) and a connection pin (112), and at least a part of the connection pin (112) is located in the first housing portion (111);
the fluid control assembly (200) is sealingly connected to the main housing (100), the fluid control assembly (200) comprises an electrical signal transmission portion (20) and a stator assembly (30), the electrical signal transmission portion (20) comprises a second housing portion (21) and an electrical transmission pin (22), at least a part of the electrical transmission pin (22) is located in the second housing portion (21), and the electrical transmission pin (22) is electrically connected to a coil of the stator assembly (30);
the control device (300) comprises a control chamber (301) and a circuit board (41) located in the control chamber (301); and
a part of the first housing portion (111) and a part of the second housing portion (21) are arranged one inside the other in a sealing manner, a first end portion (E1) of the connection pin (112) is electrically connected to the electrical transmission pin (22), and a second end portion (E2) of the connection pin (112) is electrically connected to the circuit board (41).

2. The integrated assembly (1) according to claim 1, wherein
the first housing portion (111) is injection-molded with the connection pin (112) as an insert, or the first housing portion (111) is fixedly connected to the connection pin (112);
the second housing portion (21) is injection-molded with the electrical transmission pin (22) as an insert, or the second housing portion (21) is fixedly connected to the electrical transmission pin (22); and
the integrated assembly (1) further comprises a first seal (501) that is arranged between the first housing portion (111) and the second housing portion (21).

3. The integrated assembly (1) according to claim 2, wherein the electrical signal connection portion (11) is located outside a fluid channel (101), and the integrated assembly (1) further comprises a second seal (502) that is located between the fluid control assembly (200) and the main housing (100) and is spaced apart from the first seal (501).

4. The integrated assembly (1) according to claim 1, wherein
at least a part of the control device (300) is spaced apart from the main housing (100) in a height direction (X) of the integrated assembly (1);
the second end portion (E2) of the connection pin (112) passes through the main housing (100) to be located in the control chamber (301), the second end portion (E2) of the connection pin (112) is electrically connected to the circuit board (41) through physical contact, and the first end portion (E1) of the connection pin (112) is electrically connected to the electrical transmission pin (22) through physical contact; and
one of the connection pin (112) and the electrical transmission pin (22) comprises a connection segment (E3), the other of the connection pin (112) and the electrical transmission pin (22) comprises an engagement segment (E4), and the connection segment (E3) is inserted in the engagement segment (E4) to be engaged with the engagement segment (E4).

5. The integrated assembly (1) according to claim 4, wherein
in the height direction (X) of the integrated assembly (1), a projection of an end portion of the connection pin (112) facing the circuit board (41) is within a projection of the circuit board (41); and
the number of the fluid control assembly (200) is plural, and the electrical transmission pins (22) of at least two of the plurality of fluid control assemblies (200) are located on the same side of the circuit board (41) in a thickness direction of the circuit board (41).

6. The integrated assembly (1) according to any one of claims 1 to 5, wherein
the fluid control assembly (200) comprises at least one pump assembly (50), the main housing (100) has a mounting chamber (102), and at least a part of the pump assembly (50) is located in the mounting chamber (102);
the pump assembly (50) comprises a first driving housing (52), the integrated assembly (1) comprises a pump cover portion (51), the pump cover portion (51) is sealingly connected to the first driving housing (52), the pump cover portion (51) and the main housing (100) are integrally formed or sealingly connected to each other, and the stator assembly (30) of the pump assembly (50) is located in the first driving housing (52); and
the electrical signal transmission portion (20) comprises a first transmission portion (23), and the second housing portion (21) of the first transmission portion (23) and at least a part of the first driving housing (52) are integrally formed.

7. The integrated assembly (1) according to claim 2, wherein
the fluid control assembly (200) comprises at least one pump assembly (50), the main housing (100) has a mounting chamber (102), and at least a part of the pump assembly (50) is located in the mounting chamber (102);
the pump assembly (50) comprises a first driving housing (52), the integrated assembly (1) comprises a pump cover portion (51), the pump cover portion (51) is sealingly connected to the first driving housing (52), the pump cover portion (51) and the main housing (100) are integrally formed or sealingly connected to each other, and the stator assembly (30) of the pump assembly (50) is located in the first driving housing (52); and
the electrical signal transmission portion (20) comprises a first transmission portion (23), and the second housing portion (21) of the first transmission portion (23) and at least a part of the first driving housing (52) are integrally formed.

8. The integrated assembly (1) according to claim 3, wherein
the fluid control assembly (200) comprises at least one pump assembly (50), the main housing (100) has a mounting chamber (102), and at least a part of the pump assembly (50) is located in the mounting chamber (102);
the pump assembly (50) comprises a first driving housing (52), the integrated assembly (1) comprises a pump cover portion (51), the pump cover portion (51) is sealingly connected to the first driving housing (52), the pump cover portion (51) and the main housing (100) are integrally formed or sealingly connected to each other, and the stator assembly (30) of the pump assembly (50) is located in the first driving housing (52); and
the electrical signal transmission portion (20) comprises a first transmission portion (23), and the second housing portion (21) of the first transmission portion (23) and at least a part of the first driving housing (52) are integrally formed.

9. The integrated assembly (1) according to claim 4, wherein
the fluid control assembly (200) comprises at least one pump assembly (50), the main housing (100) has a mounting chamber (102), and at least a part of the pump assembly (50) is located in the mounting chamber (102);
the pump assembly (50) comprises a first driving housing (52), the integrated assembly (1) comprises a pump cover portion (51), the pump cover portion (51) is sealingly connected to the first driving housing (52), the pump cover portion (51) and the main housing (100) are integrally formed or sealingly connected to each other, and the stator assembly (30) of the pump assembly (50) is located in the first driving housing (52); and
the electrical signal transmission portion (20) comprises a first transmission portion (23), and the second housing portion (21) of the first transmission portion (23) and at least a part of the first driving housing (52) are integrally formed.

10. The integrated assembly (1) according to claim 5, wherein
the fluid control assembly (200) comprises at least one pump assembly (50), the main housing (100) has a mounting chamber (102), and at least a part of the pump assembly (50) is located in the mounting chamber (102);
the pump assembly (50) comprises a first driving housing (52), the integrated assembly (1) comprises a pump cover portion (51), the pump cover portion (51) is sealingly connected to the first driving housing (52), the pump cover portion (51) and the main housing (100) are integrally formed or sealingly connected to each other, and the stator assembly (30) of the pump assembly (50) is located in the first driving housing (52); and
the electrical signal transmission portion (20) comprises a first transmission portion (23), and the second housing portion (21) of the first transmission portion (23) and at least a part of the first driving housing (52) are integrally formed.

11. The integrated assembly (1) according to claim 6, wherein
in a height direction (X) of the integrated assembly (1), at least a part of the main housing (100) is located between the control device (300) and the first driving housing (52);
the electrical signal connection portion (11) comprises a first connection portion (113), the electrical transmission pin (22) of the first transmission portion (23) comprises a first sub-portion (231) and a second sub-portion (232) that are electrically connected to each other, and an extension direction of the first sub-portion (231) intersects with an extension direction of the second sub-portion (232); and
the first sub-portion (231) is electrically connected to the stator assembly (30) of the pump assembly (50), the second sub-portion (232) is electrically connected to the connection pin (112) of the first connection portion (113), and both of the second sub-portion (232) and the first connection portion (113) extend along the height direction (X) of the integrated assembly (1).

12. The integrated assembly (1) according to claim 7, wherein
in a height direction (X) of the integrated assembly (1), at least part of the main housing (100) is located between the control device (300) and the first driving housing (52);
the electrical signal connection portion (11) comprises a first connection portion (113), the electrical transmission pin (22) of the first transmission portion (23) comprises a first sub-portion (231) and a second sub-portion (232) that are electrically connected to each other, and an extension direction of the first sub-portion (231) intersects with an extension direction of the second sub-portion (232); and
the first sub-portion (231) is electrically connected to the stator assembly (30) of the pump assembly (50), the second sub-portion (232) is electrically connected to the connection pin (112) of the first connection portion (113), and both of the second sub-portion (232) and the first connection portion (113) extend along the height direction (X) of the integrated assembly (1).

13. The integrated assembly (1) according to claim 11 or 12, wherein
the number of the fluid control assembly (200) is plural, the plurality of fluid control assemblies (200) further comprise at least one control valve (60), and the control valve (60) is located on an outer side of a peripheral wall of the main housing (100); and
the control valve (60) comprises a second driving housing (61) and a motor (62), the motor (62) is located in a chamber defined by the second driving housing (61), and the motor (62) comprises the stator assembly (30); and
the electrical signal transmission portion (20) comprises a second transmission portion (24), and at least a part of the second driving housing (61) and the second housing portion (21) of the second transmission portion (24) are integrally formed.

14. The integrated assembly (1) according to claim 13, wherein
an extension direction of the second transmission portion (24) intersects with the height direction (X) of the integrated assembly (1), the electrical signal connection portion (11) further comprises a second connection portion (114), the second connection portion (114) comprises a third sub-portion (1141) and a fourth sub-portion (1142), and an extension direction of the third sub-portion (1141) intersects with an extension direction of the fourth sub-portion (1142); and
the electrical transmission pin (22) of the second transmission portion (24) is electrically connected to the connection pin (112) of the third sub-portion (1141) through physical contact, and the connection pin (112) of the fourth sub-portion (1142) is electrically connected to the circuit board (41) through physical contact.

15. The integrated assembly (1) according to any one of claims 1 to 5, wherein
the main housing (100) further comprises a flow channel portion (10) and a fluid channel (101), the flow channel portion (10) forms at least a part of a wall of the fluid channel (101), and the flow channel portion (10) and the first housing portion (111) are integrally formed;
the integrated assembly (1) further has a communication port (201), the communication port (201) is at least one of an inlet and an outlet of the fluid control assembly (200), and the communication port (201) is in communication with the fluid channel (101);
the main housing (100) comprises a housing assembly (12) and a cover assembly (13), and one side of the cover assembly (13) in a thickness direction of the cover assembly (13) is fixedly and sealingly connected to the housing assembly (12) by welding; and
the control device (300) further comprises a third driving housing (42) that is located on another side of the cover assembly (13) away from the main housing (100), the third driving housing (42) is fixedly and sealingly connected to the other side of the cover assembly (13) in the thickness direction of the cover assembly (13) by welding, and the third driving housing (42) forms a part of a wall of the control chamber (301).
